# EUROPÄISCHE PATENTSCHRIFT

(11) **EP 3 774 250 B1**
(45) Veröffentlichungstag und Bekanntmachung des Hinweises auf die Patenterteilung: **29.12.2021**
(21) Anmeldenummer: 19715381.0
(22) Anmeldetag: 19.03.2019
(51) Int. Cl.: B29B 17/02, B65C 3/00, B32B 37/12

(54) **VERFAHREN ZUR NACHHALTIGEN UND ENERGIESPARENDEN HERSTELLUNG EINES RECYCELBAREN, MIT EINEM ETIKETT VERSEHENEN KUNSTSTOFFBEHÄLTERS**
METHOD FOR THE SUSTAINABLE AND ENERGY-SAVING PRODUCTION OF A RECYCLABLE PLASTIC CONTAINER PROVIDED WITH A LABEL
PROCÉDÉ DE FABRICATION DURABLE ET ÉCONOME EN ÉNERGIE D'UN RÉCIPIENT EN PLASTIQUE RECYCLABLE POURVU D'UNE ÉTIQUETTE

(30) Priorität: 05.04.2018 DE 102018108094
(43) Veröffentlichungstag der Anmeldung: 17.02.2021
(73) Patentinhaber: X-LABEL GMBH, 42653 Solingen (DE)
(72) Erfinder: HANTEL, Gero-Constantin, 42369 Wuppertal (DE)
(74) Vertreter: Patentanwälte Vomberg & Schart
(86) Internationale Anmeldenummer: PCT/DE2019/100253
(87) Internationale Veröffentlichungsnummer: WO 2019/192651

(56) Entgegenhaltungen:
- WO-A1-2017/077184
- US-A1- 2017 009 108

## Beschreibung

Die Erfindung betrifft ein Verfahren zur nachhaltigen und energiesparenden Herstellung einer recycelbaren Verpackung, die aus einem mit einem Etikett versehenen Kunststoffbehälter besteht, wobei das Etikett eine bedruckte Polyolefin- oder PET-Folie enthält, die auf den Behälter aufgeklebt wird, und wobei die Materialien der vorgenannten Teile so gewählt sind, dass entweder ein Etikett aus PET auf einem Behälter aus einem Polyolefin oder ein Etikett aus einem Polyolefin auf einem PET-Behälter aufgeklebt ist, so dass die nach dem Schreddern des mit einem Etikett versehenen Behälters anfallenden Flakes mit anhaftenden Etikettenteilen in einer warmen Waschlösung mit einer Temperatur von ≥ 50°C von anhaftenden Etikettenteilen separiert und die aufschwimmenden Teile aus reinem Polyolefin sowie die materialbedingt absinkenden Teile aus PET voneinander trennbar sind einer Wiederverwertung zuführbar sind.

Kunststoffverpackungen, insbesondere als Behälter für Flüssigkeiten, haben gegenüber Glasbehältern den Vorteil einer wesentlich geringeren Schlag- oder Stoßempfindlichkeit. Ein zerbrochener Glasbehälter stellt zudem eine Gefahrenquelle für Schnittverletzungen dar. Schließlich lassen sich durch Kunststoffverpackungen erhebliche Gewichtsmengen einsparen. Gängige Kunststoffverpackungsmaterialien sind beispielsweise Polyethylen, Polypropylen oder Polyethylenterephthalat.

Grundsätzlich sind Kunststoffe recycelbar und lassen sich zu gleichwertigen Kunststoffprodukten wiederverwenden, sofern die entsprechende Produktreinheit gegeben ist.

Herkömmliche Kunststoffverpackungen, die beispielsweise für Flüssigkeiten oder Cremes verwendet werden, sind mit einem Etikett versehen, das auf die Kunststoffverpackung aufgeklebt ist. An ein solches Etikett und den zur Anhaftung verwendeten Klebstoff werden verschiedene Anforderungen gestellt. So soll das Etikett beim normalen Gebrauchszustand gut haftend auf dem Behälter angebracht sein. Es soll sich insbesondere bei unterschiedlichen Temperaturen, Lichteinstrahlungen und Luftfeuchtigkeiten möglichst nicht vom Behälter lösen. Das Etikett dient meist zur Deklarierung des Behälters und gibt Auskunft über den Inhalt der Flasche, etwaige Marken, Zusammensetzungen oder sonstige Produktinformationen, die auf das Etikett aufgedruckt sind. Diese Drucke sollen bei den normalen Gebrauchszuständen abriebfest sein, weshalb häufig frontal bedruckte Etiketten mit einer aufkaschierten oder laminierten Schutzschicht abgedeckt sind. Konventionelle Haftetiketten sind mehrlagig aufgebaut und bestehen aus einem Obermaterial und einem Trägermaterial, die mittels eines Haftklebstoffes miteinander verbunden sind. Nach dem Stand der Technik wird zunächst ein Obermaterial, das beispielsweise eine Kunststofffolie sein kann, und das Trägermaterial aus Papier, Pappe, Kartonage oder Kunststoff hergestellt. Anschließend wird das Trägermaterial mit einer Silikonschicht einseitig beschichtet, worauf eine Haftklebstoffschicht aufgetragen wird, die schließlich zur Verbindung des Obermaterials mit dem Trägermaterial dient. Der so hergestellte Haftetikettenverbund wird nach dem Stand der Technik auf Rollen aufgewickelt und einem Druckvorgang zugefügt, wonach die einzelnen Haftetiketten aus dem Haftetikettenverbund herausgestanzt werden. Aufgrund der auf dem Trägermaterial abgeschiedenen Silikonschicht haftet der Haftkleber nur an dem Obermaterial, womit dieses als Haftetikett auf einer Verpackung aufgebracht werden kann. Bei der beschriebenen Herstellung einer etikettierten Verpackung müssen jeweilige Materiallieferungen des Trägers, des Klebstoffs sowie des Obermaterials, die von verschiedenen Herstellern kommen, angeliefert werden. Der Haftmaterial-Hersteller muss nämlich die zu bedruckende Folie vom Folienlieferanten beziehen sowie den silikonisierten Träger vom Hersteller einer solchen Trägerfolie. Nach der Verbindung der Folien mit dem Träger wird dieser Verbund zum Etikettenhersteller transportiert. Die skizzierten Transportwege führen zu einem erheblichen CO₂-Ausstoß. Eine beschränkte Abhilfe lässt sich bereits dadurch schaffen, dass das Obermaterial einseitig oder beidseitig, d.h. frontal und/oder revers bedruckt wird und danach mittels eines Kaschierklebstoffes die Verbindung zu dem Obermaterial hergestellt wird. Ein solches Verfahren wird beispielsweise in der EP 2 821 218 B9 beschrieben.

Zum Stand der Technik gehören auch sogenannte No-Label-Look-Etiketten, bei denen es sich um bedruckte, transparente Haftetiketten handelt, die den Eindruck eines Sieb-Direktdrucks vermitteln, weil die Etikettenränder nahezu unsichtbar bleiben. Solche Etiketten werden beispielsweise aus transparenten Folien wie Polyprophylen (PP) hergestellt und mit einem möglichst hochtransparenten Klebstoff auf dem Behälter befestigt. Zum Bedrucken der Etiketten können gängige Druckverfahren wie ein Tief- oder Flexodruck, ein Offset-, Buch- oder Siebdruck verwendet werden.

Um die Etiketten von einem Behälter gut entfernen zu können, sind Etiketten entwickelt worden, die aus einer Folie bestehen, welche sich im Wasserbad bei einer bestimmten Temperatur von 50°C oder mehr verformen. Eine solche Verformung, die ein Schrumpfen oder ein Wölben sein kann, führt in Verbindung mit geeigneten Klebstoffen, die in einem alkalischen Wasserbad ein ablösen der Etiketten von einer Flasche oder einem anderen Behälter ermöglichen, wurden insbesondere bei Mehrwegbehältern mit Erfolg eingesetzt.

Ferner sind auch Rundumetiketten entwickelt worden, die durch Aufwickeln auf eine Mantelfläche eines Behälters aufgebracht wird, wobei die Etikettenendkante die Etikettenanfangskante überlappt und mit dieser dauerhaft mit einem Klebstoff verbunden wird. Der Nachteil solcher Etiketten besteht darin, dass diese leicht verrutschen können, da die Folie selbst nicht mit dem entsprechenden Behälter verbunden ist. Diesen Nachteil beseitigen sogenannte Schrumpffolien, die (im aufgeweiteten Zustand) über dem Behälter gestülpt und durch Hitzeeinwirkung anschließend auf die Behälterkontur angeschmiegt werden. Schrumpfbare Folienmaterialien sind Folien aus Polyactide (Polymilchsäure oder PLA), PET, PS, PP, PE oder PVC. Als Schrumpffolien können auch thermoplastische Kunststofffolien verwendet werden, die sich bei Wärmebehandlung wieder auf ihren Urzustand zusammenziehen.

Die letztgenannten Folien-Applikationen werden jedoch im Wesentlichen auf Mehrwergflaschen aus Glas eingesetzt.

Eine andere Form der Wiederverwertung der Materialien aus etikettierten Kunststoffbehältern besteht darin, die Kunststoffanteile zu schreddern und anschließend einer Wiederverwertung zuzuführen, was jedoch voraussetzt, dass die Etiketten von dem Behälter in einer Waschlösung entfernt und anschließend separiert werden.

Aus mehreren Druckschriften ist bekannt, dass mit einem Etikett versehene Kunststoffflaschen nach einer Schredder-Zerkleinerung in einer Waschlösung bei Temperaturen oberhalb von 50°C gewaschen werden, um die auf den nach der Schredderung erhaltenen sogenannten Flakes, an denen noch Etikettenreste haften, von den Etikettenmaterialresten zu befreien. In Schwimm-Sinkbehältern sowie einer anschließende Wirbelschicht- oder Flugschichttrocknung lassen sich leichtere Kunststoffe von schwererem Restmaterial trennen.

Ein weiteres Verfahren gemäß dem Stand der Technik wird in der US 2017/009108 A1 beschrieben.

Es ist Aufgabe der vorliegenden Erfindung das eingangs genannte Verfahren dahingehend weiterzuentwickeln, dass eine nachhaltige Prozessführung gewährleistet ist.

Diese Aufgabe wird durch das Verfahren nach Anspruch 1 gelöst, das dadurch gekennzeichnet ist, dass zunächst die Polyolefin- oder PET-Folie des Etiketts frontal und/oder revers bedruckt und dass das vor und während des Druckes anfallende Makulatur-Material als Recyclingstoff abgeführt und wiederverwertet wird, anschließend die bedruckte Polyolefin- oder PET-Folie mit einem silikonisierten Träger kaschiert und der aus diesem Träger und der Folie bestehende Verbund dem Behälter zum Etikettieren zugeführt wird, wobei die Materialien der vorgenannten Teile so gewählt sind, dass entweder ein Etikett aus PET auf einem Behälter aus einem Polyolefin oder ein Etikett aus einem Polyolefin auf einem PET-Behälter aufgeklebt ist, so dass die nach einem Schreddern des mit einem Etikett versehenen Behälters anfallenden Flakes mit anhaftenden Etikettenteilen in einer warmen Waschlösung mit einer Temperatur von ≥ 50°C von anhaftenden Etikettenteilen separiert und die aufschwimmenden Teile aus reinem Polyolefin sowie die materialbedingt absinkenden Teile aus PET voneinander trennbar sind und einer Wiederverwertung zuführbar sind.

Bereits das Bedrucken der Polyolefin-Folie vor der Verbindung mit einem silikonisierten Träger führt dazu, dass der Abfall im Druckprozess signifikant reduziert werden kann. Bereits bei einer Einrichtung der Druckwerke fallen nicht verwertbare Materialströme an, die in dem nach dem Stand der Technik eingangs beschriebenen Verfahren aus Verbundwerkstoffe, nämlich dem bereits verbundenen Träger mit dem Obermaterial bestehen. Bei dem erfindungsgemäßen Verfahren müssen hingegen nur die unbrauchbaren bedruckten Folienbahnen als Makulatur vernichtet werden. In entsprechender Weise ist die Abfallreduzierung bei etwaigen Druck-Stopps oder während des Druckprozesses anfallenden Fehldrucken geringer.

Bei den herkömmlichen Verfahren waren Makulaturmengen als Sondermüll zu vernichten, wohingegen die nach dem erfindungsgemäßen Verfahren bei Fehldrucken entstehende Folie ohne weitere Zwischenbehandlung recycelfähig ist. Nach der vorliegenden Erfindung wird die vorbedruckte Folie auf einem mit Klebstoff beschichteten, silikonisierten Träger kaschiert. Eine solche Klebstoffbeschichtungsmaschine kann beim Etikettenhersteller in unmittelbarer Nähe der Druckmaschine aufgestellt werden, so dass Transportwege mit dem nachteiligen CO₂-Ausstoß entfallen können. Als Klebstoff wird ein umweltfreundlicher wasserbasierender Kunststoff verwendet. Ein solcher Klebstoff benötigt zur "Aushärtung" nur einer geringeren Wärmezufuhr, die erforderlich ist, um die Wasserbestandteile zu verdunsten. Der Energieaufwand bei solchen Klebstoffen ist weitaus geringer als bei sogenannten Heißklebern oder Klebern, die durch UV-Strahlung aktiviert werden.

Dem Etikettenaufbau kommt im Hinblick auf das spätere Recyclen eine erhebliche Bedeutung zu, weil einerseits eine hinreichende Haftbeständigkeit des Etiketts an der Kunststoffflasche erfüllt werden muss, andererseits sollen die Etikettenbestandteile nach dem Schreddern leicht von den aus dem Behälter-Kunststoffmaterial bestehenden Flakes ablösbar sein.

Vorzugsweise wird eine bedruckbare Folie geringstmöglicher Dicke verwendet. Durch diese Maßnahme können auf einer Rolle größere Mengen untergebracht werden, die in dem Weiterverarbeitungsprozess zu Etiketten verwendet werden. Allerdings muss die Dicke der Folie, die den Drucker zugeführt wird, so groß sein, dass die Folie bei der Verarbeitung nicht reißt und/oder sich durch unerwünschte Längendehnungen verzerrte Druckbilder ergeben. Vorzugsweise verwendete Folien bestehen aus PET mit einer Dicke von 12 µm bis 50 µm, weiterhin vorzugsweise von 23 µm bis 30 µm oder aus PP mit einer Dicke von 20 µm bis 60 µm, weiterhin vorzugsweise von 30 µm bis 50 µm, oder aus einer Mischfolie aus PP und PE mit einer Dicke von 40 µm bis 60 µm. Die verwendeten Folien können aus Petroleum basierenden Verbindungen bestehen, vorzugsweise werden jedoch solche Folien bevorzugt, die wenigstens teilweise auf biobasierenden Rohstoffen oder durch recycelten Rohstoffen bestehen. Vorzugsweise soll der biobasierte Anteil mindestens 90 % bis 95 % betragen.

Für die Herstellung der bedruckten Folie eignet sich insbesondere das in der EP 2 821 218 B1 beschriebene Verfahren, nach dem eine dünne Materialschicht, die z.B. aus 12 µm bis 23 µm dicken PET bestehen kann, vor dem Bedrucken auf eine Stabilisierungsschicht aufgebracht wird, von der Sie nach dem Bedrucken wieder abgetrennt und zu Transport- oder Lagerzwecken auf eine Rolle gewickelt wird. Diese PET-Folie kann später auf einen Behälter z.B. aus einem Polyolefin mit einer Dicke von 20 µm bis 50 µm aufgeklebt werden.

Im Rahmen der vorliegenden Erfindung können auch beidseitig beschichtete Folien als Etiketten verwendet werden, bei denen eine frontseitige Schicht die Eigenschaft besitzt, unter Wärmeeinwirkung, z.B. oberhalb von 50°C zu schrumpfen, und die rückseitige Schicht die Eigenschaft hat, sich unter Wärmeeinwirkung auszudehnen. Durch die Wahl solcher Beschichtungen kann der Ablösevorgang des Etiketts von dem Behälter bzw. der Etikettenbestandteile von den Behälterstücken nach einem Schreddern verbessert werden. Das Etikett besteht vorzugsweise aus einer 12 µm bis 23 µm dicken transparenten oder opaken PET-Folie, die frontseitig mit einem Lack aus einem thermoplastischen Elastomer (TPE) und rückseitig mit einem Lack aus einer Polyvinyliden-Chlorid (PVDC) beschichtet ist. Durch diese unterschiedlichen Beschichtungen wird unter Wärmeeinwirkung in einer Waschlösung das Etikett bzw. werden die Etikettenbestandteile an geschredderten Flakes schnell und leicht abgelöst.

Vorzugsweise besteht das verwendete Polyolefin zumindestens 10 Gewichts% aus einem PE hoher Dichte (HDPE) oder PP mit einem biobasierenden Anteil von mindestens 90 %, in dem Kreislauf zurückgeführten Post-Konsumenten-PE (PCR-PE), postindustriellem, in den Kreislauf zurückgeführten PE (PIR-PE) und/oder in dem Kreislauf zurückgeführten PP (PCR-PP) oder postindustriellem, in den Kreislauf zurückgeführten PP (PIR-PP) oder aus wiedergemahlenem PP oder PE.

Nach einer weiteren Ausgestaltung der Erfindung basiert das verwendete PET auf einem biobasierten Gehalt von mindestens 90 % und einem Polymer, ausgewählt aus in den Kreislauf zurückgeführten Post-Konsumenten-Polyethylenterephthalat (PCR-PET), postindustriellen, in den Kreislauf zurückgeführten Polyethylenterephthalat (PER-PET), wiedergemahlenem PET oder einer Mischung davon.

Der Träger wird vorzugsweise ebenfalls derart gewählt, dass (nach dessen Entfernung) wenig Abfall entsteht. Hierzu wird vorzugsweise ein Träger aus Glassine-Papier mit einem Gewicht zwischen 60 g/m² und 80 g/m² oder ein PET-Träger einer Dicke zwischen 12 µm und 36 µm, insbesondere zwischen 18 µm und 30 µm verwendet.

Wie bereits erwähnt wird ein wasserbasierender Klebstoff eingesetzt. Wasserlösliche oder wasserdispergierbare Klebstoffe sind nach dem Stand der Technik bekannt und werden beispielsweise in der DE 102 31 111 A1 oder WO 03/010256 A1 beschrieben, worauf Bezug genommen werden kann. Zur Verwendung bieten sich insbesondere solche wasserbasierenden Klebstoffe an, die nach dem Klebstoffauftrag unter möglichst geringer Wärmezufuhr schnell abbinden und die gleichermaßen in einer basischen Waschlösung bei Temperaturen von mehr als 50°C lösbar sind, so dass nach einem Schreddern der mit Etiketten behafteten Plastikflaschen die Flaskes, an denen noch Etikettenbestandteile anhaften, rasch in Etikettenbruchstücke und Folienbruchstücke separiert werden. Eine PET-Folie, deren Dichte bei ca. 1,35 g/cm³ liegt, wird sich in einem Absetzbehälter schwerkraftbedingt am Boden absetzen, wohingegen spezifisch leichtere Bestandteile z.B. aus HDPE oder PP auf der Waschflüssigkeit aufschwimmen.

Vorzugsweise werden Behälter aus HDPE oder PP mit den genannten PET-Etikettenmaterialien etikettiert.

In einem konkreten Ausführungsbeispiel wird eine Flasche aus HDPE oder PP mit einem Etikett versehen, das aus einer PET-Folie einer Dicke von 25 µm besteht und das mit einem wasserbasierenden Klebstoff befestigt ist. Nach dem Gebrauch ließ sich der Folienbestandteil des Haftetiketts aufgrund des höheren spezifischen Gewichtes in einer Waschlösung leicht von den geschredderten Flaschenbestandteil-Flakes aus HDPE oder PP in einem Abscheidebehälter trennen.

## Patentansprüche

1. Verfahren zur nachhaltigen und energiesparenden Herstellung einer recycelbaren Verpackung, die aus einem mit einem Etikett versehenen Kunststoffbehälter besteht, wobei das Etikett eine bedruckte Polyolefin- oder PET-Folie enthält, die auf den Behälter aufgeklebt wird und wobei die Materialien der vorgenannten Teile so gewählt sind, dass entweder ein Etikett aus PET auf einem Behälter aus einem Polyolefin oder ein Etikett aus einem Polyolefin auf einem PET-Behälter aufgeklebt ist, so dass die nach dem Schreddern des mit einem Etikett versehenen Behälters anfallenden Flakes mit anhaftenden Etikettenteilen in einer warmen Waschlösung mit einer Temperatur von ≥ 50°C von anhaftenden Etikettenteilen separiert und die aufschwimmenden Teile aus reinem Polyolefin sowie die materialbedingt absinkenden Teile aus PET voneinander trennbar sind einer Wiederverwertung zuführbar sind.
**dadurch gekennzeichnet, dass**
zunächst die Polyolefin- oder PET-Folie frontal und/oder revers bedruckt und dass das vor und während des Druckens anfallende Makulatur-Material als Recycling-Stoff abgeführt wird und wiederverwertet wird, anschließend die bedruckte Polyolefin- oder PET-Folie auf einem silikonisierten Träger kaschiert und der aus diesem Träger und der Folie bestehende Verbund dem Behälter zum Etikettieren zugeführt wird.

2. Verfahren nach Anspruch 1, **dadurch gekennzeichnet, dass** die bedruckte Folie eine PET-Folie, vorzugsweise mit einer Dicke von 12 µm bis 50 µm, weiterhin vorzugsweise einer Dicke von 23 µm bis 30 µm, oder eine PP-Folie, vorzugsweise mit einer Dicke von 20 µm bis 60 µm, weiterhin vorzugsweise 30 µm bis 50 µm, oder eine Mischfolie aus PP und PE, vorzugsweise mit einer Dicke von 40 µm bis 60 µm ist.

3. Verfahren nach Anspruch 1, **dadurch gekennzeichnet, dass** der Träger aus Glassine-Papier besteht, das vorzugsweise zwischen 60 g/m² und 80 g/m² liegt, oder aus PET mit einer Dicke von 12 µm bis 36 µm, vorzugsweise 18 µm bis 30 µm besteht.

4. Verfahren nach einem der Ansprüche 1 bis 3, **dadurch gekennzeichnet, dass** als Klebstoff ein wasserbasierender Klebstoff verwendet wird, bei dem in einer basischen Waschlösung bei mehr als 50°C die Etikettenteile von den Behälterteilen abgelöst werden.

5. Verfahren nach einem der Ansprüche 1 bis 4, **dadurch gekennzeichnet, dass** der Behälter aus HDPE oder PP besteht, auf dem ein PET-Etikett befestigt wird.

6. Verfahren nach einem der Ansprüche 1 bis 5, **dadurch gekennzeichnet, dass** das Polyolefin zumindestens 10 Gewichts% aus einem PE hoher Dichte (HPDE) oder PP mit einem biobasierten Anteil von mindestens 90 %, in den Kreislauf zurückgeführtem Post-Konsumenten-PE (PCR-PE), postindustriellem, in den Kreislauf zurückgeführten PE (PIR-PE) und/oder in den Kreislauf zurückgeführten Post-Konsumenten Polypropylen (PCR-PP) oder postindustriellem, in den Kreislauf zurückgeführten Polypropylen (PIR-PP) oder wiedergemahlenem PP oder PE besteht.

7. Verfahren nach einem der Ansprüche 1 bis 6, **dadurch gekennzeichnet, dass** das verwendete PET einen biobasierten Gehalt von mindestens 90 % und ein Polymer aus in den Kreislauf zurückgeführtem Post-Konsumenten-Polyethylenterephthalat (PCR-PET) und oder postindustriellem in den Kreislauf zurückgeführtem Polyethylenterephthalat (PER-PET) und/oder wiedergemahlenen Polyethylenterephthalat und einer Mischung davon besteht.

8. Verfahren nach einem der Ansprüche 1 bis 7, **dadurch gekennzeichnet, dass** das Etikett aus einer Folie besteht, die vorder- und rückseitig unterschiedliche Beschichtungen aufweist, bei der eine Beschichtung unter Wärmeeinwirkung schrumpft und die anderen Beschichtung sich unter Wärmeeinwirkung ausdehnt.

9. Verfahren nach einem der Ansprüche 1 bis 8, **dadurch gekennzeichnet, dass** auf die das Etikett vorgesehene Folie vor dem Bedrucken eine Stabilisierungsschicht aufgebracht wird, die nach dem Bedrucken wieder abgetrennt wird, bevor die Folie zu Lager- und/oder Transportzwecken zu einer Rolle aufgewickelt wird.

## Claims

1. Method for the sustainable and energy-saving production of a recyclable packaging which consist of a plastic container provided with a label, the label containing a printed polyolefin- or PET-film which is adhesively bonded to the container and wherein the materials of the aforesaid parts are being selected such that either a label made of PET is adhesively bonded to a container made of polyolefin, or a label made of polyolefin is adhesively bonded to a PET container, so that the flakes with adhering label parts produced after shredding of the container provided with a label are separated from adhering label parts in a warm washing solution at a Temperature of ≥ 50°C and the floating parts consisting of pure polyolefin and the parts of PET which sink owing to the material can be separated from each other and fed to a recycling stage,
**characterized in that**
first the polyolefin- or PET-film is printed on the front and/or reverse and that the waste material produced before and during the printing is removed as recycling material and reused, subsequently the printed polyolefin- or PET-film is laminated on a siliconized carrier and the compound consisting of this carrier and the film is fed to the container for labelling.

2. Method according to claim 1, **characterized in that** the printed film is a PET-film, preferably with a thickness of 12 µm to 50 µm, furthermore preferably with a thickness of 23 µm to 30 µm, or a PP-film, preferably with a thickness of 20 pm to 60 pm, furthermore preferably 30 pm to 50 pm, or a mixed film of PP and PE, preferably with a thickness of 40 pm to 60 pm.

3. Method according to claim 1, **characterized in that** the carrier consists of glassine-paper preferably lying between 60 g/m² and 80 g/m² or of PET with a thickness of 12 µm to 36 µm, preferably 18 µm to 30 µm.

4. Method according to one of claims 1 to 3, **characterized in that** as an adhesive a water-based adhesive is used, wherefrom the label parts are peeled from the container parts in a basic washing solution at more than 50°C.

5. Method according to one of the claims 1 to 4, **characterized in that** the container is made of HDPE or PP, whereon a PET-label is fixed.

6. Method according to one of claims 1 to 5, **characterized in that** the polyolefin consists of at least 10 weight% of a PE with high density (HPDE) or PP with a bio-based proportion of at least 90 %, post-consumer recirculated PE (PCR-PE), post-industrial recirculated PE (PIR-PE) and/or recirculated post-consumer polypropylene (PCR-PP) or post-industrial, recirculated polypropylene (PIR-PP) or regrinded PP or PE.

7. Method according to one of claims 1 to 6, **characterized in that** the used PET has a bio-based content at least 90 % and a polymer made of recirculated post-consumer polyethylene terephthalate (PCR-PET) and/or post-industrial recirculated polyethylene terephthalate (PER-PET) and/or regrinded polyethylene terephthalate and a mixture thereof.

8. Method according to one of claims 1 to 7, **characterized in that** the label consists of a film which has different coatings on the front and on the back, in which one coating shrinks when heated and the other coating expands when heated.

9. Method according to one of claims 1 to 8, **characterized in that**, prior to printing, a stabilization layer is applied, to the film provided as label the stabilization layer is separated after the printing before the film is wound into a roll for storage and/or transport purposes.

## Revendications

1. Procédé de production durable et à faible consommation d'énergie d'un emballage recyclable qui consiste en un récipient en matière plastique pourvu d'une étiquette, dans lequel l'étiquette contient un film en polyoléfine ou en PET imprimé qui est collé sur le récipient, et dans lequel les matières des pièces susmentionnées sont choisies de telle sorte que soit une étiquette en PET est collée sur un récipient en une polyoléfine soit une étiquette en une polyoléfine est collée sur un récipient en PET de sorte que les flocons produits après le broyage du récipient pourvu de l'étiquette et comprenant des parties d'étiquette adhérentes sont séparés de parties d'étiquette adhérentes dans une solution de lavage chaude ayant une température de ≥ 50 °C, et que les parties flottantes en polyoléfine pure ainsi que les parties en PET qui, dû à la matière, coulent au fond, peuvent être amenées à un recyclage en étant séparables,
**caractérisé par le fait que** d'abord le film en polyoléfine ou en PET est imprimé au recto et/ou au verso et que le matériau de maculature qui est produit avant et pendant l'impression est évacué en tant que matériau de recyclage et est réutilisé, que, ensuite, le film en polyoléfine ou en PET imprimé est contrecollé sur un support siliconé et que le composite se composant de ce support et du film est amené au récipient pour l'étiquetage.

2. Procédé selon la revendication 1, **caractérisé par le fait que** le film imprimé est un film en PET, de préférence d'une épaisseur comprise entre 12 µm et 50 µm, en outre de préférence d'une épaisseur comprise entre 23 µm et 30 µm, ou un film en PP, de préférence d'une épaisseur comprise entre 20 µm et 60 µm, en outre de préférence comprise entre 30 µm et 50 µm, ou un film mixte en PP et en PE, de préférence d'une épaisseur comprise entre 40 µm et 60 µm.

3. Procédé selon la revendication 1, **caractérisé par le fait que** le support est constitué de papier cristal, qui est de préférence compris entre 60 g/m² und 80 g/m², ou est constitué de PET présentant une épaisseur comprise entre 12 µm et 36 µm, de préférence entre 18 µm et 30 µm.

4. Procédé selon l'une quelconque des revendications 1 à 3, **caractérisé par le fait qu'**un adhésif à base d'eau est utilisé en tant qu'adhésif, dans lequel les parties d'étiquette sont détachées des parties de récipient dans une solution de lavage basique à plus de 50 °C.

5. Procédé selon l'une quelconque des revendications 1 à 4, **caractérisé par le fait que** le récipient est fait à partir de PEHD ou de PP, sur lequel est apposée une étiquette en PET.

6. Procédé selon l'une quelconque des revendications 1 à 5, **caractérisé par le fait que** la polyoléfine est constituée pour au moins 10 % en poids d'un PE haute densité (PEHD) ou de PP ayant une proportion biosourcée d'au moins 90 %, de PE recyclé post-consommation (PCR-PE), de PE recyclé post-industriel (PIR-PE) et/ou de polypropylène post-consommation recyclé (PCR-PP) ou de polypropylène recyclé post-industriel (PIR-PP) ou de PP ou PE rebroyé.

7. Procédé selon l'une quelconque des revendications 1 à 6, **caractérisé par le fait que** le PET utilisé présente une teneur biosourcée de 90 % au moins et un polymère constitué de polyéthylène téréphtalate post-consommation recyclé (PCR-PET) et/ou de polyéthylène téréphtalate recyclé post-industriel (PER-PET) et/ou de polyéthylène téréphtalate rebroyé ainsi que d'un mélange de ceux-ci.

8. Procédé selon l'une quelconque des revendications 1 à 7, **caractérisé par le fait que** l'étiquette est constituée d'un film qui présente des revêtements différents au recto et au verso, dans lequel un revêtement se rétracte sous l'action de la chaleur et l'autre revêtement se dilate sous l'action de la chaleur.

9. Procédé selon l'une quelconque des revendications 1 à 8, **caractérisé par le fait que**, avant l'impression, une couche de stabilisation est appliquée sur le film prévu pour l'étiquette, laquelle couche est à nouveau détachée après impression, avant que le film soit enroulé pour former un rouleau à des fins de stockage et/ou de transport.
